# NEW EUROPEAN PATENT SPECIFICATION

(11) **EP 3 562 319 B2**
(45) Date of publication and mention of the opposition decision: **13.11.2024**
(45) Mention of the grant of the patent: 02.06.2021
(21) Application number: 17829093.8
(22) Date of filing: 18.12.2017
(51) Int. Cl.: A23K 10/10, A23K 40/00, A23K 50/40, A23K 10/20, A23K 10/24, A23K 10/30, A23K 50/48, A23L 13/40, A23K 10/16

(54) **PET FOOD PRODUCT COMPRISING MICROALGAE AS BINDER**
HAUSTIERFUTTERPRODUKT MIT MIKROALGEN ALS BINDEMITTEL
ALIMENT POUR ANIMAUX DOMESTIQUE COMPRENANT DES MICROALGUES COMME AGENT LIANT

(30) Priority: 29.12.2016 GB 201622360
(43) Date of publication of application: 06.11.2019
(73) Proprietor: Mars, Incorporated, McLean, VA 22101 (US)
(72) Inventor: LIGNET, Charles Henri, 30470 Aimargues (FR); CARNEY, John, Portland Oregon 97229 (US)
(74) Representative: Haseltine Lake Kempner LLP
(86) International application number: PCT/US2017/066973
(87) International publication number: WO 2018/125631

(56) References cited:
- WO-A1-2014/015000
- WO-A1-2016/176456
- WO-A1-2016/176465
- WO-A1-2016/176466
- CN-A- 106 721 361
- US-A1- 2011 256 282
- US-A1- 2012 082 762

## Description

### BACKGROUND

The invention relates to the use of algal biomass and animal blood plasma as a binder in wet pet food products and processes for the preparation of the wet pet food products comprising said use.

US2011/256282 A1 describes algal flour, algal biomass and food compositions comprising algal biomass or algal flour with a high lipid content.

US 2012/082762 A1 describes pet treats and methods of manufacturing pet treats comprising unprocessed meats.

WO 2014/015000 A1 describes an algal-based animal feed composition, animal feed supplement, and uses thereof.

WO 2016/176456 A1 describes a wet pet food product comprising a meat analogue.

WO 2016/176465 A1 describes a wet pet food product comprising a composite meat product.

WO 2016/176466 A1 describes a process of preparing a sterilised wet pet food product.

CN 106 721 361 A describes a high protein wet dog food for protecting intestines and stomachs of puppies.

Pet foods have long been manufactured from animal by-products and non-animal derived ingredients in order to prepare high quality food that provide the pet with the required nutrient profile without competing with the human food demand for meat. As the global population increases the global demand for high protein foods including meat is expected to increase, so an increasing need for pet foods prepared from alternative proteins while meeting the nutritional needs of pets is expected. There is therefore an increasing need for pet foods to be manufactured from more sustainable proteins, in particular for pet foods incorporating a higher amount of non-animal protein while maintaining or improving high levels of nutrition and quality.

Replacing animal proteins with alternative proteins in pet foods requires a number of issues to be addressed, e.g. the products must have integrity (they must not dry out or crumble), they must be palatable to the pet and must have textures and smells that are desirable to both the pet and the pet owner. It is also preferable for new analogue products to be prepared using existing recipes and existing processing assets.

Pet food is commonly categorized on the basis of its moisture content:
(1) Dry or low moisture content products (defined herein as exhibiting less than 15 wt% moisture content). These products typically combine high nutritional content with convenience.
(2) Semi-moist or semi-dry or soft dry or intermediate or medium moisture content products (defined herein as exhibiting from 15 to 50 wt% moisture content).
(3) Wet or high moisture content products (defined herein as exhibiting greater than 50 wt% moisture content). These products are generally most palatable to pets.

The present invention is directed towards wet pet food, of which there are two main types.

### SUMMARY

The first type of wet pet food product is known as 'paté' or 'loaf' and is typically prepared by processing a mixture of edible components under heat to produce a homogeneous semi-solid mass that is structured by heat-coagulated protein. This homogeneous mass is usually packaged into single serve or multi serve packaging which is then sealed and sterilized. Upon packing, the homogeneous mass assumes the shape of the container.

The second type of wet pet food product is known as 'chunk-in-gravy', 'chunk-in-jelly' or 'chunk-in-mousse', depending on the nature of the sauce component, and these types of products are referred to generically herein as 'chunk-in-sauce' products. The present invention is particularly directed to 'chunk-in-sauce' wet pet food products. The chunks comprise meat pieces or restructured meat pieces. Restructured meat pieces are typically prepared by making a meat emulsion containing a heat-settable component, and by applying thermal energy to 'set' the emulsion and allowing it to assume the desired shape. The product pieces are combined with a sauce (e.g. gravy, jelly or mousse) in single serve or multi serve packaging which is then sealed and sterilized.

Many wet pet food products contain a significant amount of meat and animal by-products. Reconstitution of animal by-products into aesthetically pleasing restructured or reconstituted meat chunks is a key feature of most wet pet food products. A widely used technology relies on the heat setting of meat proteins and the addition of heat-settable binders. Soluble meat proteins coagulate and create a strong matrix when heated above 80°C. Additives such as dried animal blood plasma and other heat setting binders are included to give sufficient chunk strength. However, blood plasma is an expensive commodity, and it would be desirable to utilise other binders which have a more sustainable and/or flexible and/or economic supply chain.

It would therefore be desirable to provide a replacement for animal blood plasma in reconstituted meat chunks and wet pet food products, particularly wherein the physical characteristics of the reconstituted meat chunks and wet pet food products are maintained or improved. The physical characteristic of the reconstituted meat chunks which is of particular importance is chunk strength or hardness. Cohesiveness or stability of the reconstituted meat chunk is also of importance.

According to aspects of the present invention, there is provided the use according to claim 1 and the process according to claim 15.

Further described (not part of the invention) is a wet pet food product comprising reconstituted anima material, wherein said reconstituted animal material comprises animal protein and a binder, wherein said binder comprises algal biomass.

### DETAILED DESCRIPTION

### Algal biomass

As used herein, the term "algal biomass" refers to microalgae or the extract thereof (wherein extract of microalgae is referred to herein as "microalgal extract"). Microalgae are single-celled plant organisms. As used herein, the terms "microalgae" and "microalgal extracts" refer to edible microalgae and microalgal extracts, i.e. those that do not cause harm to an animal when ingested. Cultures of microalgae may be obtained from publically available sources, e.g. those available commercially and those that can be obtained by techniques known in the art, e.g. using known culturing methods such as fermentation, photosynthesis, heterotrophy or autotrophy.

The microalgae include those rich in one or more polyunsaturated fatty acids (particularly arachidonic acid) namely Rhodophytes (e.g. *porphyridium*). The algae are those that produce arachidonic acid in the form of a phospholipid or glycolipid, i.e., Rhodophytes, in particular *porphyridium*. The microalgae is a red microalgae algae. The microalgae is suitably a *porphyridium* microalgae, preferably *porphyridium cruentum*.

The algal biomass preferably comprises at least about 25% carbohydrate, preferably at least about 30% carbohydrate. The algal biomass preferably comprises at least about 25% protein, preferably at least about 30%. The stated percentages are the % weight by total weight of the dried biomass.

The microalgae may be microalgae which have been grown in the absence of salt or have been desalted. Suitable methods for desalting are well known in the art and can include, among other techniques, washing (e.g. with water) or filtration (e.g. microfiltration, ultrafiltration or diafiltration).

### The reconstituted animal material

As noted above, the reconstituted animal material comprises animal protein and a binder, wherein the binder comprises algal biomass and animal blood plasma, wherein the algal biomass is edible microalgae or extract of microalgae, wherein said microalgae are selected from Rhodophytes.

The inventors have unexpectedly found that algal biomass-containing binders are heat-settable. In other words, the binder creates a matrix with meat or animal protein when heated above about 80°C. The matrix is sufficiently strong to create a strong and stable chunk.

The reconstituted animal material preferably comprises from about 0.5 to about 10 wt%, preferably from about 0.5 to about 8 wt%, preferably from about 0.5 to about 5 wt%, preferably at least about 2 wt%, preferably at least about 3 wt%, preferably from about 3 to about 5%, preferably at least about 4 wt% of the binder, by total weight of the reconstituted animal material.

Preferably the binder comprises at least about 5 wt%, preferably at least about 10 wt%, preferably at least about 25 wt%, preferably at least about 30 wt%, preferably at least about 40 wt%, preferably at least about 45 wt% of said algal biomass, by total weight of the binder. The binder may comprise at least 50 wt%, or at least 60 wt%, or at least 75 wt%, or at least 85 wt%, or at least 95 wt% of said algal biomass, The binder also comprises animal blood plasma in combination with said algal biomass. The binder suitably consists or consists essentially of said algal biomass and said animal blood plasma. In a particularly preferred embodiment, the binder comprises from about 30 to about 70 wt% algal biomass (preferably from about 35 to about 65 wt%, preferably from about 40 to about 60, preferably from about 45 to about 55 wt%) and from about 30 to about 70 wt% animal blood plasma (preferably from about 35 to about 65 wt%, preferably from about 40 to about 60, preferably from about 45 to about 55 wt%), by total weight of the binder.

The animal blood plasma is suitably dried animal blood plasma, as conventionally used in the preparation of reconstituted animal material in pet food products. A preferred animal blood plasma is pork plasma.

The reconstituted animal material comprises animal protein. As used herein, the term "animal protein" refers to proteins that originate from vertebrates, such as mammals, fowl and fish. Animal protein may originate, for example, from muscle meat, organs, tendons or bone.

The animal protein in the reconstituted animal material is typically derived from ground animal material, said ground animal material preferably being selected from meat, animal by-products and combinations thereof. The ground animal material may contain at least 50 wt%, or at least 70 wt% or at least 85 wt% of animal by-product. Animal by-products are the entire bodies or parts of bodies of animals or products of animal origin not intended for human consumption; such by-products are conventional in the art for the manufacture of ground animal material suitable for use in pet food products.

Preferably, the reconstituted animal material contains, or is derived from a composition comprising:
(i) binder in an amount from about 0.5 to about 10 wt% by total weight of the reconstituted animal material, as described above;
(ii) ground animal material in an amount of from about 50 to about 99 wt%, preferably from about 60 to about 99 wt%, preferably from about 65 to about 99 wt%, and preferably no more than about 95 wt% or no more than about 90 wt% or no more than about 85 wt%, by total weight of the reconstituted animal material.

The reconstituted animal material, or the composition from which it is derived, may further comprise added water.

The reconstituted animal material may further contain additional ingredients conventionally used in the manufacture of reconstituted meat and wet pet food products, such as fat(s), antioxidant(s), carbohydrate source(s), fiber source(s), additional source(s) of protein (including vegetable protein), seasoning, colorant(s), flavouring(s), mineral(s), preservative(s), vitamin(s), emulsifier(s), farinaceous material(s) and combinations thereof.

The reconstituted animal material may be prepared by an extrusion process at elevated temperature, according to conventional techniques known in the art.

Preferably, the reconstituted animal material is prepared by a process comprising the steps of:
(i) providing ground animal material (which is suitably prepared by grinding pieces of animal material to prepare ground animal material, said animal material being selected from meat, animal by-products and combinations thereof);
(ii) mixing the ground animal material with the heat-settable binder, and optionally additional ingredients, for instance the additional ingredients conventionally used in the manufacture of reconstituted meat and wet pet food products described hereinabove, to prepare a slurry;
(iii) subjecting the slurry to conditions of shear to produce an emulsion; forming a layer of emulsion;
(iv) heating the layer of emulsion to an internal temperature of at least 70°C (preferably at least about 80°C); and
(v) cutting or shredding the layer into discrete pieces of reconstituted animal material.

**The** ingredients may be mixed using any suitable equipment conventional in the art, for instance a heated extruder or a jacketed paddle mixer, optionally combining the ingredients with water.

In the process described above, the slurry preferably comprises from about 50 to about 99 wt% (preferably from about 60 to about 99 wt%, preferably from about 65 to about 99 wt%, and preferably no more than about 95 wt% or no more than about 90 wt% or no more than about 85 wt%) of the ground animal material.

The emulsification of the slurry may be performed in any conventional equipment, for instance a bowl chopper, or meat grinders, including rotating knives and die-plate combinations comprising holes of a defined diameter (for instance from about 0.5mm to about 10mm) through which the material passes. Optionally, the resulting material may then be transferred to a mixer where water, dry ingredients (e.g. protein powder of vegetable origin) and liquid ingredients may be added.

The layer of emulsion formed in the process may take the form of, for instance, a sheet, a slab, a ribbon or rope.

In order to activate the heat-settable binder, the emulsion is suitably heated to an internal temperature of at least 70°C, preferably at least 75°C, preferably at least 80°C, and typically no more than about 105°C. The duration of heating is at least 30 seconds, preferably from about 1 to about 60 minutes. The heating of the layer of emulsion is suitably conducted in a steam tunnel.

The layer of emulsion is suitably heated from below by applying steam to the underside of a continuous belt carrying said layer and/or from above by bringing steam into direct contact with the layer of emulsion. Preferably, the emulsion is cooked in a steam tunnel, typically comprising a conveyor system (such as a conveyor belt), which blanches or cooks the emulsion with saturated or super-heated steam injected from above and/or below, thereby exposing the emulsion to a continual and even application of steam to ensure it is cooked thoroughly and set. The emulsion may be in the form of individual chunks during the heating step, but typically cutting into chunks is performed after the heating step.

As used herein, the term "emulsion" refers to a thick mixture of water and other substances derived from raw materials, such as meat or meat by-products. These "emulsions" are dispersions of fat particles and air bubbles in a complex phase composed of water, solubilized meat protein, cellular components and other ingredients. The emulsions may also be referred to as a meat "batter" or a meat "slurry". Such terms are well understood in the art and are used interchangeably. Typically, the emulsions comprise a continuous phase which is an aqueous medium comprising soluble proteins, soluble muscle constituents, segments of muscle fibers, connective tissue fibers, bones etc., and optionally materials of plant origin materials such as proteins and/or starches and/or fibers and/or minerals, as well as further additives conventional in the art.

Other methods to form the reconstituted animal material include the high moisture extrusion techniques described in WO-00/69276-A. Another suitable process for making the reconstituted animal material is described in US 4,247,562. In general terms, the heated extruder is used to combine ingredients, typically also with water. The mixture is plasticised and heated to form a hot, viscous and at least partly molten mass. The extruder mixes, heats, coagulates, expands and shears the mixture into a meat-like mass which is then extruded and formed into shapes as desired.

A particular advantage of the present invention is the ability to use standard processing and equipment to form the reconstituted animal material.

The total protein content of the reconstituted animal material is preferably in an amount in the range of from about 5 to about 40 wt%, preferably at least about 10 wt%, preferably at least about 15 wt%, and typically no more than about 36 wt%, and preferably from about 25 wt% to about 36 wt%. The protein may comprise animal protein(s), vegetable protein(s) or any combination thereof. The protein fraction of the reconstituted animal material preferably contains at least 50 wt% of animal protein, preferably at least about 60 wt%, preferably at least about 70 wt%, preferably at least about 80 wt%, preferably at least about 90% of animal protein, by total weight of the protein fraction of the reconstituted animal material. Animal proteins include any protein of animal origin (including vertebrate and invertebrate proteins), e.g. proteins derived from mammals, fowl, fish and insects. Examples of suitable animal proteins include those derived from chicken, turkey, beef, lamb, pork, venison, buffalo, duck, kangaroo, shell fish, crustaceans, salmon, tuna, whitefish and the like. They may suitably be derived from muscle meat, organs, tendons, bone etc. Further suitable animal proteins include milk or egg derived proteins. Suitable vegetable proteins include proteins derived from wheat, maize, pea, lupine, potato and the like, for example wheat gluten. The proteins may be in any suitable form, including but not limited to, isolated or partially isolated, concentrated or ground.

The fat content of the reconstituted animal material is preferably less than about 15 wt%, preferably no more than about 13 wt%, preferably no more than about 12 wt%, preferably no more than about 10 wt%, preferably at least about 2 wt%, preferably at least about 4 wt%. The term "fat" as used herein refers to esters of fatty acids such as triglycerides, diglycerides, monoglycerides and phospholipids. The fat preferably contains at least 50 wt%, more preferably at least 70 wt% of triglycerides. The fat may suitably contain animal fat, vegetable oil, marine oil and combinations thereof. Typically, the fat contains at least 10 wt%, more preferably at least 30 wt% and most preferably at least 50 wt% of an animal fat. The animal fat preferably originates from an animal selected from cattle, pigs, sheep, goat, poultry, fish and combinations thereof.

The water content of the reconstituted animal material is typically up to about 75 wt%, or up to about 65 wt%, and typically at least about 20 wt% or at least about 30 wt% or at least about 40 wt% or at least about 50 wt%, and preferably in the range of from about 50 to about 55 wt%, by total weight of the reconstituted animal material.

The fiber and carbohydrate content of the reconstituted animal material is typically up to about 20 wt%, by total weight of the reconstituted animal material. Preferably, the reconstituted animal material comprises no more than about 10 wt% fiber, preferably no more than about 5 wt%, preferably no more than about 2 wt%, typically no more than about 1 wt%, and preferably at least about 0.5 wt%, by total weight of the reconstituted animal material.

The reconstituted animal material typically exhibits a density of from about 0.8 to about 1.2 g/ml.

The size of the reconstituted animal material will vary and depends on the animal that is to consume the pet food and/or the format of the pet food. The longest dimension of the reconstituted animal material is typically from about 5mm to about 200mm, preferably at least about 10mm, preferably no more than about 150mm. Where the reconstituted animal material is a chunk suitable for a chunk-in-sauce product, as described hereinbelow, the longest dimension is preferably no more than about 50 mm, more preferably no more than about 40 mm, more preferably no more than about 30 mm, and in a preferred embodiment from about 5 mm to 25 mm, preferably from about 13 to about 20mm.

The reconstituted animal material may also be referred to as a "meat analogue".

### The wet pet food product

The term "pet food" as used herein refers to a food composition designed for ingestion by a pet. The wet pet food provided herein is preferably a nutritionally balanced food product to provide a pet with all the essential nutrients it needs in the appropriate quantities.

The pet food may be a pet food providing health and/or nutrition benefits to the pet, e.g. weight management pet foods, satiety pet foods and/or pet foods capable of improving renal function in the pet.

The wet pet food product and the components used therein are selected for consumption by a pet and are not intended for consumption by humans. The term "pet" as used herein preferably refers to a domestic animal, preferably a companion animal, particularly cats or dogs, and in one embodiment cats.

The wet pet food may be a loaf (or pate) product. As noted above, such products are normally in the form of a single piece of reconstituted animal material packaged in a container, such as a can, a pouch or a tray. Typically, these shaped pieces of reconstituted animal material have a piece volume of from about 20 to about 2,000 cm³, more preferably from about 40 to about 1,500 cm³, for instance from about 500 to about 1200 cm³. After packaging and sealing, the aforementioned product is preferably sterilized within the package, e.g. by retort sterilization.

Alternatively, the wet pet food is a chunk-in-sauce product, as described herein above. The term "sauce" as used herein encompasses gravies, jellies and mousses, and preferably refers to a composition in the form of a fluid, a paste, a gel or a mousse. The sauce comprises a liquid carrier, such as water, fats or oils. Preferably the composition is an aqueous composition. A chunks-in-sauce product is prepared by combining the pieces of reconstituted animal material with a sauce, packaging the combination, sealing in the package and sterilizing the package, e.g. by retort sterilization. The pieces of reconstituted animal material may be added to the packaging while the sauce is poured over the pieces, for instance a heated sauce which allows the pieces to warm up and trapped gases to be expelled prior to sealing the packaging. Alternatively, ingredients are added to the reconstituted animal material and packaged, where the ingredients, in the usual sterilisation process, result in the formation in the package of the sauce mixed with the reconstituted animal material.

Sealing of the packaging may be and preferably is conducted using vacuum-sealing.

Retort sterilization is preferably conducted at a retorting temperature in the range from about 115°C to about 130°C, preferably for approximately 20 to 120 minutes, in order to produce a commercially sterile product.

The packaging may be a can (or tin) or jar (e.g. glass) or otherwise a plastic, metal, foil pouch, or flexifoil.

The wet pet food product may comprise up to 100 wt% of the reconstituted animal material, and preferably at least about 5 wt% of the reconstituted animal material, by total weight of the wet pet food product. In other words, the wet pet food product may comprise, consist essentially or consist of the reconstituted animal material. A loaf product suitably consists essentially or consists of the reconstituted animal material. A chunks-in-sauce product preferably comprises a ratio of reconstituted animal material: sauce of from about 20:80 to about 90:10, preferably at least about 30:70, preferably at least about 40:60, preferably at least about 50:50, preferably at least about 60:40.

The sauce component of the wet pet food product may be any suitable sauce conventional in the art of wet pet food, and typically exhibits a water content of at least about 80 wt%, typically at least about 90 wt%, typically no more than about 98 wt%, by total weight of the sauce. The sauce typically comprises a thickening agent which is used to control its consistency. Thickeners or gelling agents that may be used to prepare the sauce include carrageenan, xanthan, guar gum, cassia gum, starch, gelatine and combinations thereof. The sauce is typically a coating which surrounds the reconstituted animal material.

The sauce may contain additional ingredients conventionally used in the manufacture of wet pet food products, such as fat, antioxidants, carbohydrates, seasoning, colorants, flavouring, minerals, preservatives, vitamins, emulsifiers, farinaceous materials and combinations thereof. The sauce preferably comprises one or more flavouring agents.

Flavourings impart particular taste or smell and may be derived from natural ingredients or artificially created. Flavourings may include one or more products of the Maillard reaction. Flavouring agents such as beef flavour and meat flavour can be used in amounts sufficient to impart the desired flavour.

Further described is a dry or semi-moist pet food product, i.e. a product exhibiting less than 15 wt% moisture or from 15 to 50 wt% respectively, comprising or consisting essentially or consisting of the reconstituted animal material described herein. The reconstituted animal material may also be incorporated into pet food products generally, including supplements, snacks and treats, such as a dry kibble product.

Also described (not part of the invention) is a reconstituted animal material comprising animal protein and a binder, wherein the binder comprises algal biomass as described herein.

The present invention will now be described with reference to the following non-limiting examples.

### Examples

### Example 1

A series of protein gelling tests was conducted using dried porcine blood plasma (control), freeze-dried *porphyridium cruentum* algal biomass, and mixtures thereof, in order to compare the gelling properties of the binder and hardness of the resultant materials.

A 5% binder solution was made in deionized water and heated to an initial temperature of 90°C for 5 minutes, and then cooled at 25°C overnight. The algal biomass and the porcine blood plasma binders formed stable gels. The algal biomass samples initially formed gels that appeared thicker than the porcine blood plasma samples. Using a 13mm arch punch, 13mm chunks of the gels were punch-cut, and the hardness of each chunk was tested under compression with a TA-HDplus ^{®} Texture Analyser (Stable Micro Systems).

Surprisingly, the algal biomass-containing gelled samples exhibited hardness which matched or exceeded the porcine blood plasma control. A mixture of 50% algal biomass and 50% porcine blood plasma unexpectedly produced a gelled chunk which exhibited hardness greater than the control, and greater than the 100% algal biomass sample. For the 50:50 gelled chunks (with a mean weight of 0.966 g), the mean hardness was measured at 440 g per gram of chunk.

### Example 2

A series of reconstituted animal material samples comprising animal protein was prepared using the algal biomass and/or porcine blood plasma as the binder (in ratios of 0:100 (comparative example), 25:75, 50:50, 75:25 and 100:0 (comparative example) algal biomass : porcine blood plasma). The animal protein was derived from ground animal material as described herein. The binder comprised 4 wt% of the composition and the ground animal material comprised 96 wt% of the composition. The reconstituted animal material was prepared by a process as described hereinabove, comprising the preparation of a slurry from the mixture of ground animal material and binder. The slurry was subjected to conditions of shear to produce an emulsion, which was then heated to at least 80°C and then cut to generate discrete pieces of reconstituted animal material. The reconstituted animal material was then combined with a conventional water-based sauce to generate a chunks-in-sauce wet cat food.

The reconstituted animal material comprising algal biomass as binder exhibited a satisfactory hardness which enabled the preparation of wet pet foods therefrom. Thus, the reconstituted animal material was combined with a conventional water-based sauce to generate a chunks-in-sauce wet cat food.

## Claims

1. The use of algal biomass and animal blood plasma as a binder in a reconstituted animal material comprising animal protein wherein said reconstituted animal material is present in a wet pet food product wherein said algal biomass is edible microalgae or extract of microalgae, wherein said microalgae are selected from Rhodophytes.

2. The use of claim 1 wherein said microalgae are selected from porphyridium, preferably porphyridium cruentum.

3. The use of claim 1 or claim 2 wherein the algal biomass comprises at least about 25 wt% carbohydrate and at least about 25 wt% protein, by total weight of the dried biomass.

4. The use of any preceding claim wherein said algal biomass is desalted algal biomass.

5. The use of any preceding claim wherein said binder comprising said algal biomass is heat-settable.

6. The use of any preceding claim wherein said reconstituted animal material comprises from about 0.5 to about 10 wt%, preferably from about 0.5 to about 5 wt%, and preferably at least about 3 wt% of the binder, by total weight of the reconstituted animal material.

7. The use of any preceding claim wherein the binder comprises at least about 5 wt%, preferably at least about 10 wt%, preferably at least about 25 wt%, preferably at least about 30 wt%, preferably at least about 40 wt%, preferably at least about 45 wt% of said algal biomass, by total weight of the binder.

8. The use of any preceding claim wherein the bindercomprises at least 50 wt%, or at least 60 wt%, or at least 75 wt%, or at least 85 wt%, or at least 95 wt% of said algal biomass.

9. The use of any of claims 1 to 7 wherein the binder comprises algal biomass and animal blood plasma, or consists or consists essentially of algal biomass and animal blood plasma, preferably wherein the binder comprises from about 30 to about 70 wt% algal biomass and from about 30 to about 70 wt% animal blood plasma by total weight of the binder, preferably wherein the binder comprises from about 45 to about 55 wt% algal biomass and from about 45 to about 55 wt% animal blood plasma by total weight of the binder.

10. The use of any of claims 1 to 9 wherein the animal blood plasma is dried animal blood plasma, preferably porcine blood plasma.

11. The use of any preceding claim wherein the reconstituted animal material comprises a composition comprising:
(i) binder in an amount from about 0.5 to about 10 wt% by total weight of the reconstituted animal material; and
(ii) ground animal material in an amount of from about 50 to about 99 wt%, by total weight of the reconstituted animal material.

12. The use of any preceding claim wherein the reconstituted animal material further contain additional ingredients conventionally selected from fat(s), antioxidant(s), carbohydrate source(s), fiber source(s), additional source(s) of protein, seasoning, colorant(s), flavouring(s), mineral(s), preservative(s), vitamin(s), emulsifier(s), farinaceous material(s) and combinations thereof.

13. The use according to any of the preceding claims wherein:
(a) the total protein content of the reconstituted animal material is in the range of from about 5 to about 40 wt%, preferably from about 25 wt% to about 36 wt%, by total weight of the reconstituted animal material, preferably wherein the protein fraction of the reconstituted animal material contains at least 50 wt% of animal protein by total weight of the protein fraction of the reconstituted animal material, and/or
(b) the fat content of the reconstituted animal material is less than about 15 wt% and preferably at least about 2 wt%, preferably from about 4 wt% to about 13 wt%, preferably wherein said fat fraction comprises at least 50 wt% of triglycerides by total weight of the fat fraction, and/or
(c) the water content of the reconstituted animal material is up to about 75 wt%, and preferably at least about 20 wt%, and preferably from about 50 to about 55 wt%, by total weight of the reconstituted animal material.

14. The use according to any of claims 1 to 13 wherein the reconstituted animal material:
(a) exhibits a density of from about 0.8 to about 1.2 g/ml, and/or
(b) has the longest dimension from about 5mm to about 150mm.

15. A process for the preparation of a wet pet food product comprising reconstituted animal material wherein said reconstituted animal material comprises animal protein and a binder comprising algal biomass and animal blood plasma, wherein said algal biomass is edible microalgae or extract of microalgae, wherein said microalgae are selected from Rhodophytes, said process comprising the steps of
(i) mixing ground animal material with a heatsettable binder comprising algal biomass and animal blood plasma;
(ii) preferably, preparing a slurry from said mixture and subjecting the slurry to conditions of shear to produce an emulsion of said mixture;
(iii) heating the mixture to an internal temperature of at least 70°C, preferably at least about 80°C, preferably no more than about 105°C, preferably wherein the duration of heating is at least 30 seconds, preferably from about 1 to about 60 minutes; and
(iv) forming discrete pieces of reconstituted animal material
and the process comprising the use of algal biomass and animal blood plasma as a binder as defined in claim 1 and further comprising:
(v) optionally combining said reconstituted animal material with a sauce;
(vi) inserting said reconstituted animal material and optional sauce into packaging; and
(vii) sealing and sterilizing the package to provide a packaged wet pet food product.

16. A process according to claim 15 wherein said slurry comprises ground animal material in an amount of from about 50 to about 99 wt% by weight of the slurry.

17. A process according to claim 15 or claim 16 wherein said heating of the mixture is conducted by heating from below by applying steam to the underside of a continuous belt carrying said mixture and/or from above by bringing steam into direct contact with said mixture.

18. A process according to any of claims 15 to 17, wherein the algal biomass, animal blood plasma and/or the reconstituted animal material are as defined in any of claims 1 to 14.

## Patentansprüche

1. Verwendung von Algenbiomasse und Tierblutplasma als Bindemittel in einem rekonstituierten Tiermaterial, das Tierprotein umfasst, wobei das rekonstituierte Tiermaterial in einem feuchten Haustiernahrungsprodukt vorhanden ist, wobei die Algenbiomasse essbare Mikroalgen sind oder ein Extrakt von Mikroalgen ist, wobei die Mikroalgen aus Rhodophyten ausgewählt sind.

2. Verwendung gemäß Anspruch 1, wobei die Mikroalgen aus Porphyridium, vorzugsweise Porphyridium cruentum, ausgewählt sind.

3. Verwendung gemäß Anspruch 1 oder Anspruch 2, wobei die Algenbiomasse wenigstens etwa 25 Gew.-% Kohlenhydrat und wenigstens etwa 25 Gew.-% Protein, bezogen auf das Gesamtgewicht der getrockneten Biomasse, umfasst.

4. Verwendung gemäß einem der vorstehenden Ansprüche, wobei die Algenbiomasse entsalzte Algenbiomasse ist.

5. Verwendung gemäß einem der vorstehenden Ansprüche, wobei das Bindemittel, das die Algenbiomasse umfasst, durch Wärme abbindbar ist.

6. Verwendung gemäß einem der vorstehenden Ansprüche, wobei das rekonstituierte Tiermaterial von etwa 0,5 bis etwa 10 Gew.-%, vorzugsweise von etwa 0,5 bis etwa 5 Gew.-% und vorzugsweise wenigstens etwa 3 Gew.-%, bezogen auf das Gesamtgewicht des rekonstituierten Tiermaterials, an dem Bindemittel umfasst.

7. Verwendung gemäß einem der vorstehenden Ansprüche, wobei das Bindemittel wenigstens etwa 5 Gew.-%, vorzugsweise wenigstens etwa 10 Gew.-%, vorzugsweise wenigstens etwa 25 Gew.-%, vorzugsweise wenigstens etwa 30 Gew.-%, vorzugsweise wenigstens etwa 40 Gew.-%, vorzugsweise wenigstens etwa 45 Gew.-%, bezogen auf das Gesamtgewicht des Bindemittels, an der Algenbiomasse umfasst.

8. Verwendung gemäß einem der vorstehenden Ansprüche, wobei das Bindemittel wenigstens 50 Gew.-% oder wenigstens 60 Gew.-% oder wenigstens 75 Gew.-% oder wenigstens 85 Gew.-% oder wenigstens 95 Gew.-% an der Algenbiomasse umfasst.

9. Verwendung gemäß einem der Ansprüche 1 bis 7, wobei das Bindemittel Algenbiomasse und Tierblutplasma umfasst oder aus Algenbiomasse und Tierblutplasma besteht oder im Wesentlichen daraus besteht, wobei das Bindemittel vorzugsweise von etwa 30 bis etwa 70 Gew.-% Algenbiomasse und von etwa 30 bis etwa 70 Gew.-% Tierblutplasma, bezogen auf das Gesamtgewicht des Bindemittels, umfasst, wobei das Bindemittel vorzugsweise von etwa 45 bis etwa 55 Gew.-% Algenbiomasse und von etwa 45 bis etwa 55 Gew.-% Tierblutplasma, bezogen auf das Gesamtgewicht des Bindemittels, umfasst.

10. Verwendung gemäß einem der Ansprüche 1 bis 9, wobei das Tierblutplasma getrocknetes Tierblutplasma, vorzugsweise Schweineblutplasma, ist.

11. Verwendung gemäß einem der vorstehenden Ansprüche, wobei das rekonstituierte Tiermaterial eine Zusammensetzung umfasst, die umfasst:
(i) Bindemittel in einer Menge von etwa 0,5 bis etwa 10 Gew.-%, bezogen auf das Gesamtgewicht des rekonstituierten Tiermaterials; und
(ii) gemahlenes Tiermaterial in einer Menge von etwa 50 bis etwa 99 Gew.-%, bezogen auf das Gesamtgewicht des rekonstituierten Tiermaterials.

12. Verwendung gemäß einem der vorstehenden Ansprüche, wobei das rekonstituierte Tiermaterial ferner zusätzliche Bestandteile enthält, herkömmlich ausgewählt aus Fett(en), Antioxidationsmittel(n), Kohlenhydratquelle(n), Ballaststoffquelle(n), zusätzliche(n) Proteinquelle(n), Würzmittel, Farbstoff(en), Aromastoff(en), Mineralstoff(en), Konservierungsmittel(n), Vitamin(en), Emulgator(en), mehlhaltigen Material(ien) und Kombinationen davon.

13. Verfahren gemäß einem der vorstehenden Ansprüche, wobei:
(a) der Gesamtproteingehalt des rekonstituierten Tiermaterials in dem Bereich von etwa 5 bis etwa 40 Gew.-%, vorzugsweise von etwa 25 Gew.-% bis etwa 36 Gew.-%, bezogen auf das Gesamtgewicht des rekonstituierten Tiermaterials, liegt, wobei der Proteinanteil des rekonstituierten Tiermaterials vorzugsweise wenigstens 50 Gew.-% Tierprotein, bezogen auf das Gesamtgewicht des Proteinanteils des rekonstituierten Tiermaterials, enthält, und/oder
(b) der Fettgehalt des rekonstituierten Tiermaterials weniger als etwa 15 Gew.-% und vorzugsweise wenigstens etwa 2 Gew.-%, vorzugsweise von etwa 4 Gew.-% bis etwa 13 Gew.-%, beträgt, wobei der Fettanteil vorzugsweise wenigstens 50 Gew.-% Triglyceride, bezogen auf das Gesamtgewicht des Fettanteils, umfasst, und/oder
(c) der Wassergehalt des rekonstituierten Tiermaterials bis zu etwa 75 Gew.-% und vorzugsweise wenigstens etwa 20 Gew.-% und vorzugsweise von etwa 50 bis etwa 55 Gew.-%, bezogen auf das Gesamtgewicht des rekonstituierten Tiermaterials, beträgt.

14. Verwendung gemäß einem der Ansprüche 1 bis 13, wobei das rekonstituierte Tiermaterial:
(a) eine Dichte von etwa 0,8 bis etwa 1,2 g/ml aufweist und/oder
(b) eine längste Abmessung von etwa 5 mm bis etwa 150 mm aufweist.

15. Verfahren zur Herstellung eines feuchten Haustiernahrungsprodukts, das rekonstituiertes Tiermaterial umfasst, wobei das rekonstituierte Tiermaterial Tierprotein und ein Bindemittel umfassend Algenbiomasse und Tierblutplasma umfasst, wobei die Algenbiomasse essbare Mikroalgen sind oder ein Extrakt von Mikroalgen ist, wobei die Mikroalgen aus Rhodophyten ausgewählt sind, wobei das Verfahren die Schritte umfasst:
(i) Mischen von gemahlenem Tiermaterial mit einem durch Wärme abbindbaren Bindemittel, das Algenbiomasse und Tierblutplasma umfasst;
(ii) vorzugsweise Herstellen einer Aufschlämmung aus dem Gemisch und Unterwerfen der Aufschlämmung an Scherungsbedingungen, um eine Emulsion des Gemischs herzustellen;
(iii) Erhitzen des Gemischs auf eine innere Temperatur von wenigstens 70 °C, vorzugsweise wenigstens etwa 80 °C, vorzugsweise nicht mehr als etwa 105 °C, wobei die Dauer des Erhitzens vorzugsweise wenigstens 30 Sekunden, vorzugsweise von etwa 1 bis etwa 60 Minuten, beträgt; und
(iv) Bilden von diskreten Stücken von rekonstituiertem Tiermaterial
und wobei das Verfahren die Verwendung von Algenbiomasse und Tierblutplasma als Bindemittel gemäß Anspruch 1 umfasst, und ferner umfasst:
(v) gegebenenfalls Kombinieren des rekonstituierten Tiermaterials mit einer Sauce;
(vi) Einführen des rekonstituierten Tiermaterials und der optionalen Sauce in eine Verpackung; und
(vii) Verschließen und Sterilisieren der Verpackung, um ein verpacktes feuchtes Haustiernahrungsprodukt bereitzustellen.

16. Verfahren gemäß Anspruch 15, wobei die Aufschlämmung gemahlenes Tiermaterial in einer Menge von etwa 50 bis etwa 99 Gew.-%, bezogen auf das Gewicht der Aufschlämmung, umfasst.

17. Verfahren gemäß Anspruch 15 oder Anspruch 16, wobei das Erhitzen des Gemischs durch Erhitzen von unten durch Anwendung von Dampf an die Unterseite eines kontinuierlichen Bands, das das Gemisch trägt, und/oder von oben durch direktes Inkontaktbringen von Dampf mit dem Gemisch durchgeführt wird.

18. Verfahren gemäß einem der Ansprüche 15 bis 17, wobei die Algenbiomasse, das Tierblutplasma und/oder das rekonstituierte Tiermaterial wie in einem der Ansprüche 1 bis 14 definiert ist.

## Revendications

1. Utilisation d'une biomasse algale et de plasma sanguin animal comme liant dans une matière animale reconstituée comprenant des protéines animales, ladite matière animale reconstituée étant présente dans un produit alimentaire humide pour animaux de compagnie, ladite biomasse algale étant des microalgues ou un extrait de microalgues comestible(s), lesdites microalgues étant choisies parmi les Rhodophytes.

2. Utilisation selon la revendication 1, dans laquelle lesdites microalgues sont choisies parmi porphyridium, préférablement porphyridium cruentum .

3. Utilisation selon la revendication 1 ou la revendication 2, dans laquelle la biomasse algale comprend au moins environ 25 % en poids d'hydrates de carbone et au moins environ 25 % en poids de protéines, par poids total de la biomasse séchée.

4. Utilisation selon l'une quelconque des revendications précédentes, dans laquelle ladite biomasse algale est une biomasse algale dessalée.

5. Utilisation selon l'une quelconque des revendications précédentes, dans laquelle ledit liant comprenant ladite biomasse algale est thermodurcissable.

6. Utilisation selon l'une quelconque des revendications précédentes, dans laquelle ladite matière animale reconstituée comprend d'environ 0,5 à environ 10 % en poids, de préférence d'environ 0,5 à environ 5 % en poids, et de préférence au moins environ 3 % en poids du liant, par rapport au poids total de la matière animale reconstituée.

7. Utilisation selon l'une quelconque des revendications précédentes, dans laquelle le liant comprend au moins environ 5 % en poids, de préférence au moins environ 10 % en poids, de préférence au moins environ 25 % en poids, de préférence au moins environ 30 % en poids, de préférence au moins environ 40 % en poids, de préférence au moins environ 45 % en poids de ladite biomasse algale, par poids total du liant.

8. Utilisation selon l'une quelconque des revendications précédentes, dans laquelle le liant comprend au moins 50 % en poids, ou au moins 60 % en poids, ou au moins 75 % en poids, ou au moins 85 % en poids, ou au moins 95 % en poids de ladite biomasse algale.

9. Utilisation selon l'une quelconque des revendications 1 à 7, dans laquelle le liant comprend une biomasse algale et du plasma sanguin animal, ou est constitué, ou est constitué essentiellement, d'une biomasse algale et de plasma sanguin animal, de préférence dans laquelle le liant comprend d'environ 30 à environ 70 % en poids de biomasse algale et d'environ 30 à environ 70 % en poids de plasma sanguin animal, par poids total du liant, de préférence dans laquelle le liant comprend d'environ 45 à environ 55 % en poids de biomasse algale et d'environ 45 à environ 55 % en poids de plasma sanguin animal, par poids total du liant.

10. Utilisation selon l'une quelconque des revendications 1 à 9, dans laquelle le plasma sanguin animal est du plasma sanguin animal séché, de préférence du plasma sanguin de porc.

11. Utilisation selon l'une quelconque des revendications précédentes, dans laquelle la matière animale reconstituée comprend une composition comprenant :
(i) un liant en une quantité d'environ 0,5 à environ 10 % en poids par poids total de la matière animale reconstituée ; et
(ii) une matière animale broyée en une quantité d'environ 50 à environ 99 % en poids, par poids total de la matière animale reconstituée.

12. Utilisation selon l'une quelconque des revendications précédentes, dans laquelle la matière animale reconstituée contient en outre des ingrédients additionnels traditionnellement choisis parmi une ou plusieurs graisses, un ou plusieurs antioxydants, une ou plusieurs sources d'hydrates de carbone, une ou plusieurs sources de fibres, une ou plusieurs sources additionnelles de protéines, un agent de sapidité, une ou plusieurs matières colorantes, un ou plusieurs arômes, un ou plusieurs minéraux, un ou plusieurs conservateurs, une ou plusieurs vitamines, un ou plusieurs émulsifiants, une ou plusieurs matières farineuses et les combinaisons de ceux-ci.

13. Utilisation selon l'une quelconque des revendications précédentes, dans laquelle
(a) la teneur totale en protéines de la matière animale reconstituée est dans la plage d'environ 5 à environ 40 % en poids, de préférence d'environ 25 % en poids à environ 36 % en poids, par poids total de la matière animale reconstituée, de préférence dans laquelle la fraction protéique de la matière animale reconstituée contient au moins 50 % en poids de protéines animales, par poids total de la fraction protéique de la matière animale reconstituée, et/ou
(b) la teneur en graisses de la matière animale reconstituée est inférieure à environ 15 % en poids et de préférence d'au moins environ 2 % en poids, de préférence d'environ 4 % en poids à environ 13 % en poids, de préférence dans laquelle ladite fraction de graisses comprend au moins 50 % en poids de triglycérides, par poids total de la fraction de graisses, et/ou
(c) la teneur en eau de la matière animale reconstituée est jusqu'à environ 75 % en poids, et de préférence est d'au moins environ 20 % en poids, et de préférence est d'environ 50 à environ 55 % en poids, par rapport au poids total de la matière animale reconstituée.

14. Utilisation selon l'une quelconque des revendications 1 à 13, dans laquelle la matière animale reconstituée
(a) présente une densité d'environ 0,8 à environ 1,2 g/ml, et/ou
(b) a une dimension la plus longue d'environ 5 mm à environ 150 mm.

15. Procédé pour la préparation d'un produit alimentaire humide pour animaux de compagnie comprenant une matière animale reconstituée, dans lequel ladite matière animale reconstituée comprend des protéines animales et un liant comprenant une biomasse algale et un plasma sanguin animal, ladite biomasse algale étant des microalgues ou un extrait de microalgues comestible(s), lesdites microalgues étant choisies parmi les Rhodophytes, ledit procédé comprenant les étapes de :
(i) mélange d'une matière animale broyée avec un liant thermodurcissable comprenant une biomasse algale et du plasma sanguin animal ;
(ii) de préférence, la préparation d'une suspension à partir dudit mélange, et la soumission de la suspension à des conditions de cisaillement pour produire une émulsion dudit mélange ;
(iii) le chauffage du mélange jusqu'à une température d'au moins 70 °C, de préférence d'au moins environ 80 °C, de préférence non supérieure à environ 105 °C, de préférence dans lequel la durée de chauffage est d'au moins 30 secondes, de préférence d'environ 1 à environ 60 minutes, et
(iv) la formation de morceaux discrets de matière animale reconstituée,
et le procédé comprenant l'utilisation d'une biomasse algale et de plasma sanguin animal comme liant comme défini dans la revendication 1 et comprenant en outre :
(v) éventuellement, la combinaison de ladite matière animale reconstituée avec une sauce ;
(vi) l'insertion de ladite matière animale reconstituée et éventuellement de ladite sauce dans un emballage ; et
(vii) le scellement et la stérilisation de l'emballage, pour donner un produit alimentaire humide emballé pour animaux de compagnie.

16. Procédé selon la revendication 15, dans lequel ladite suspension comprend une matière animale broyée en une quantité d'environ 50 à environ 99 % en poids de la suspension.

17. Procédé selon la revendication 15 ou la revendication 16, dans lequel ledit chauffage du mélange est réalisé par chauffage par en-dessous, par application de vapeur à la face inférieure d'un tapis continu portant ledit mélange et/ou par en haut, en amenant de la vapeur en contact direct avec ledit mélange.

18. Procédé selon l'une quelconque des revendications 15 à 17, dans lequel la biomasse algale, le plasma sanguin animal et/ou le matière animale reconstituée sont tels que définis dans l'une quelconque des revendications 1 à 14.
